# EUROPEAN PATENT APPLICATION

(11) **EP 4 835 629 A1**
(43) Date of publication of application: **04.11.2026**
(21) Application number: 25192713.3
(22) Date of filing: 30.07.2025
(51) Int. Cl.: G06F 3/044, H01Q 1/22, H04B 5/43

(54) **CONDUCTIVE GRID RADIO FREQUENCY CONTROL MODULE, SYSTEM AND METHOD, AND TOUCH PANEL INCLUDING THE SAME**

(30) Priority: 30.04.2025 TW 114116415
(71) Applicant: Flytech Technology Co., Ltd., Taipei City 11494 (TW)
(72) Inventor: CHOU, Li-Chun, Taipei City 11494 (TW); FENG, Tien-Hsien, Taipei City 11494 (TW)
(74) Representative: Boult Wade Tennant LLP

(57) **Abstract**

The present invention relates to a conductive grid radio frequency control method. The method includes providing a first driving conductive wire and a first sensing conductive wire configured to cross over each other without electrical connection; generating a first radio frequency (RF) carrier signal and a second RF carrier signal having the same operating frequency; and applying the first RF carrier signal and the second RF carrier signal to the first driving conductive wire and the first sensing conductive wire respectively in sequence, to generate a rotating alternating magnetic field around the first driving conductive wire and the first sensing conductive wire.

## Description

### CROSS-REFERENCE TO RELATED APPLICATION

This application claims priority benefit to Taiwan Invention Patent Application Serial No. 114116415, filed on April 30, 2025, in Taiwan Intellectual Property Office, the entire disclosures of which are incorporated by reference herein.

### FIELD

The present invention relates to the technical field of electronic devices, and more particularly to a conductive grid radio frequency control module, system and method, and a touch panel including the same, capable of simulating and functioning as a radio frequency antenna based on and by controlling the conventional sensor conductive grid structure within an existing touch panel.

### BACKGROUND

With the widespread of applications such as mobile payment, smart access control, electronic ticketing, smart tags, identity recognition, and data exchange, NFC (near field communication) technology has been extensively applied in electronic products such as smartphones, POS terminals, SCO terminals, tablet computers, and wearable devices. NFC technology typically operates in the 13.56 MHz ISM HF (high-frequency) band, and its principle is to use magnetic coupling for non-contact short-range communication.

In conventional technology, an NFC antenna is typically designed as a planar spiral coil or a multi-turn loop coil, and is generally fabricated by etching to remove a copper conductive layer on a printed circuit board. When NFC operates, an NFC control chip in an initiating device first generates a 13.56 MHz alternating current and transmits it to the NFC antenna, thereby generating an alternating magnetic field around the NFC antenna. When a target device enters the alternating magnetic field, a corresponding induced current is generated, driving internal components of the target device to operate, to achieve energy transmission or data exchange. An NFC antenna typically has a size that may range from a few square centimeters to several tens of square centimeters, depending on the size of the application device.

On the other hand, touch screens have become standard equipment in various electronic products today. As for touch panels, the current mainstream technology is the projected capacitive (PCAP) touch panel. A PCAP touch panel has the core structure including a matrix-type conductive grid consisting of a transparent conductive material. The conductive grid consists of two layers of mutually insulated electrodes: the driving electrodes are usually arranged on the lower layer, where the sensing electrodes are usually arranged on the upper layer. These two sets of electrodes are arranged orthogonally to form a matrix-type grid structure. The conductive grid has a line width or a pitch that may be as small as the micron level, depending on the resolution requirements. The touch panels configured on smartphones or tablet computers may have size which ranges from 5 inches to 12 inches, while the size of touch panels configured on larger machines such as POS terminals and SCO terminals ranges from 17 inches to 24 inches or even larger.

A PCAP touch panel functions based on the operating principle as follows. when the controller sequentially applies alternating current (AC) voltage signals to the driving electrodes, a small mutual capacitance is formed at each intersection between the driving and sensing electrodes. When a user's finger approaches or touches the panel surface, it interferes with the electric field around the intersection point, causing a decrease in the mutual capacitance value at that point. The controller is configured to scan the entire sensing electrode array to detect any variations in mutual capacitance and determine the touch position based on intersections where significant capacitance changes occur.

The NFC antenna and the touch panel appear to be two unrelated components with different functions, structures, and applications. However, if the NFC antenna could be integrated with the conductive grid of the touch panel, such as by commonly sharing the conductive grid or conductive layers, it may not only simplify product structures, save space and cost, but also enable the development of a novel type of component. Nevertheless, up to date, such an innovative structural integration has yet to be seen in related technical fields or commercially available products.

Hence, there is a need to solve the above deficiencies/issues. In view of the shortcomings of conventional technologies, the inventor has conceived the present invention, titled "Conductive Grid Radio Frequency Control Module, System and Method, and Touch Panel Including the Same", through diligent research and perseverance. The present invention is capable of overcoming the aforementioned drawbacks. A brief description of the invention is provided below.

### SUMMARY

The present invention relates to the technical field of electronic devices, and more particularly to a conductive grid radio frequency control module, system and method, and a touch panel including the same, capable of simulating and functioning as a radio frequency antenna based on and by controlling the conventional sensor conductive grid structure within an existing touch panel.

Accordingly, the present invention provides a conductive grid radio frequency control method. The method includes providing a first driving conductive wire and a first sensing conductive wire configured to cross over each other without electrical connection; generating a first radio frequency (RF) carrier signal and a second RF carrier signal having the same operating frequency; and applying the first RF carrier signal and the second RF carrier signal to the first driving conductive wire and the first sensing conductive wire respectively in sequence, to generate a rotating alternating magnetic field around the first driving conductive wire and the first sensing conductive wire.

The present invention further provides a conductive grid radio frequency control module. The module includes a conductive grid including a driving conductive wire and a sensing conductive wire configured to cross over each other without electrical connection; an RF controller module configured to: generate a first RF carrier signal and a second RF carrier signal having the same operating frequency; and apply the first RF carrier signal and the second RF carrier signal to the sensing conductive wire and the driving conductive wire respectively in sequence, to generate a rotating alternating magnetic field around the driving conductive wire and the sensing conductive wire.

The present invention further provides a conductive grid radio frequency control system. The system includes a conductive grid including a driving conductive wire and a sensing conductive wire configured to cross over each other without electrical connection; an RF controller module configured to: generate a first RF carrier signal and a second RF carrier signal having the same operating frequency; apply the first RF carrier signal and the second RF carrier signal to the driving conductive wire and the sensing conductive wire respectively in sequence, to generate a rotating alternating magnetic field around the driving conductive wire and the sensing conductive wire to simulate an antenna unit; and display an indication information corresponding to the antenna unit within a display area included in a touch display; a touch panel driver module configured to drive the conductive grid to act as a touch sensor grid; a switch configured to control an electrical connection of the conductive grid with either the RF controller module or with the touch panel driver module; and a main control module configured to control the switch and the display area of the touch display to display the indication information corresponding to the antenna unit.

The present invention further provides a touch panel. The touch panel includes a conductive grid including a driving conductive wire and a sensing conductive wire configured to cross over each other without electrical connection; and an RF controller module configured to: generate a first RF carrier signal and a second RF carrier signal having the same operating frequency; and apply the first RF carrier signal and the second RF carrier signal to the sensing conductive wire and the driving conductive wire respectively in sequence, to generate a rotating alternating magnetic field around the driving conductive wire and the sensing conductive wire

The above content described in the summary is intended to provide a simplified summary for the presently disclosed invention, so that readers are able to have an initial and basic understanding to the presently disclosed invention. The above content is not aimed to reveal or disclose a comprehensive and detailed description for the present invention, and is never intended to indicate essential elements in various embodiments in the present invention, or define the scope or coverage in the present invention.

### DESCRIPTION OF THE DRAWINGS

A more complete appreciation according to the present invention and many of the attendant advantages thereof are readily obtained as the same become better understood by reference to the following detailed description when considered in connection with the accompanying drawing, wherein:
FIG. 1 is a schematic diagram illustrating the top view structure for the conductive grid radio frequency control module included in the present invention;
FIG. 2 is a schematic diagram illustrating the side cross-sectional structure for the conductive grid included in the present invention;
FIG. 3 is a schematic diagram illustrating a combined waveform after superposition of multiple segments of radio frequency carrier signals generated by the RF controller module in the first embodiment included in the present invention;
FIG. 4 is a schematic diagram illustrating the application of multiple segments of radio frequency carrier signals to a first turn coil to form a rotating alternating magnetic field included in the first embodiment;
FIG. 5 is a schematic diagram illustrating the application of multiple segments of radio frequency carrier signals to a second turn coil to form a rotating alternating magnetic field included in the first embodiment;
FIG. 6 is a schematic diagram illustrating the application of multiple segments of radio frequency carrier signals to a third turn coil to form a rotating alternating magnetic field included in the first embodiment;
FIG. 7 is a schematic diagram illustrating the structure for the antenna unit simulated by implementing the first embodiment included in the present invention;
FIG. 8 is a schematic diagram illustrating the structure for the antenna unit simulated by implementing the second embodiment included in the present invention;
FIG. 9 is a schematic diagram illustrating the structure for the antenna unit simulated by implementing the third embodiment included in the present invention;
FIG. 10 is a schematic diagram illustrating the control principle for the fourth embodiment included in the present invention;
FIG. 11 is a schematic diagram illustrating the control principle for the fifth embodiment included in the present invention;
FIG. 12 is a schematic diagram illustrating the system architecture for the RF controller module included in the present invention;
FIG. 13 is a schematic diagram illustrating the system architecture for the conductive grid radio frequency control system included in the present invention;
FIG. 14 is a schematic diagram illustrating the sensing area configuration obtained by performing the selective sensing area configuration for the touch panel included in the touch display by the conductive grid radio frequency control system included in the present invention;
FIG. 15 is a schematic diagram illustrating the indication information correspondingly displayed in the touch display when the conductive grid radio frequency control system included in the present invention operates the selective sensing area configuration; and
FIG. 16 is a flow chart showing the implementation steps for the conductive grid radio frequency control method included in the present invention.

### DETAILED DESCRIPTION

The present disclosure will be described with respect to particular embodiments and with reference to certain drawings, but the disclosure is not limited thereto but is only limited by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice. It is clear that other embodiments can be configured according to the knowledge of persons skilled in the art without departing from the true technical teaching of the present disclosure, the claimed disclosure being limited only by the terms of the appended claims.

It is to be noticed that the term "including," used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device including means A and B" should not be limited to devices consisting only of components A and B.

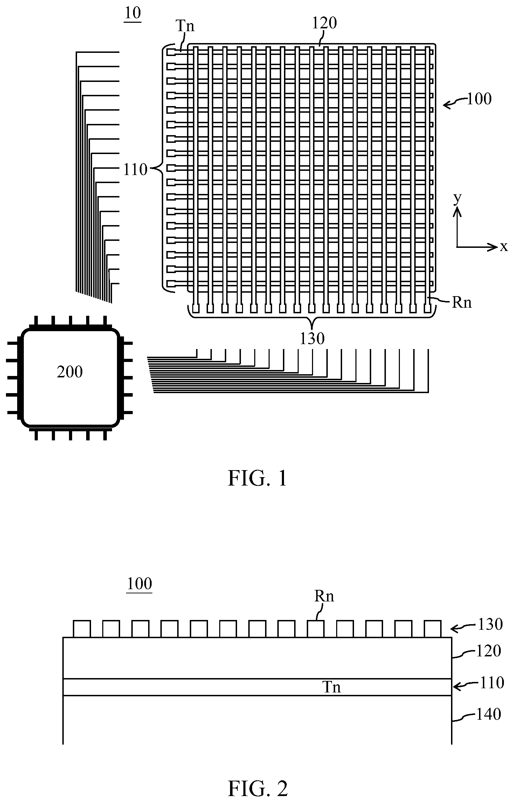

FIG. 1 is a schematic diagram illustrating the top view structure for the conductive grid radio frequency control module included in the present invention; FIG. 2 is a schematic diagram illustrating the side cross-sectional structure for the conductive grid included in the present invention. The conductive grid radio frequency control module 10 provided by the present invention preferably includes a conductive grid 100 and an RF controller module 200. The conductive grid 100 preferably includes a driving conductive wire layer 110, a light-transmitting insulating layer 120, and a sensing conductive wire layer 130. The driving conductive wire layer 110 preferably includes a plurality of driving conductive wires Tn arranged parallel to an x-axis direction, and the sensing conductive wire layer 130 preferably includes a plurality of sensing conductive wires Rn arranged parallel to a y-axis direction. Preferably, the driving conductive wire layer 110 is disposed below the sensing conductive wire layer 130, the sensing conductive wire layer 130 is disposed above the driving conductive wire layer 110, and a light-transmitting insulating layer 120 is disposed between the driving conductive wire layer 110 and the sensing conductive wire layer 130 to prevent the direct contact between the driving conductive wire layer 110 and the sensing conductive wire layer 130.

The plurality of driving conductive wires Tn and the plurality of sensing conductive wires Rn are disposed on a substrate 140. The substrate 140 is preferably, for example but not limited to: a glass substrate or other transparent substrate. The plurality of driving conductive wires Tn and the plurality of sensing conductive wires Rn are separated by the light-transmitting insulating layer 120, and there is no electrical connection therebetween. In this embodiment, the plurality of driving conductive wires Tn and the plurality of sensing conductive wires Rn form an orthogonal arrangement in space, but the plurality of driving conductive wires Tn and the plurality of sensing conductive wires Rn can also be arranged to cross over each other at other angles in space, for example but not limited to: 30 degrees, 45 degrees, or 60 degrees, while remaining electrically isolated from each other by the light-transmitting insulating layer.

In some embodiments, the plurality of driving conductive wires Tn and the plurality of sensing conductive wires Rn are preferably made of a transparent conductive oxide (TCO), made of, for example but not limited to, indium tin oxide (ITO), nano metal wires, nano silver wires, or other materials having conductivity and transparency. Each driving conductive wire Tn and each sensing conductive wire Rn has a thickness of approximately between tens of nanometers to hundreds of micrometers, for example, approximately between 100 nm to 100 µm.

In some embodiments, the conductive grid 100 is preferably a sensor grid or a sensing array within a projected capacitive (PCAP) touch panel or a mutual capacitance touch panel. The plurality of driving conductive wires Tn and the plurality of sensing conductive wires Rn are preferably a plurality of driving electrodes (Tx) and a plurality of sensing electrodes (Rn) included in the sensor grid, respectively.

The RF controller module 200 is electrically connected to each driving conductive wire Tn and each sensing conductive wire Rn of the conductive grid 100 to control the driving conductive wires Tn and the sensing conductive wires Rn to emit radio frequency carrier signals. The RF controller module 200 is configured to generate radio frequency carrier signals having an operating frequency.

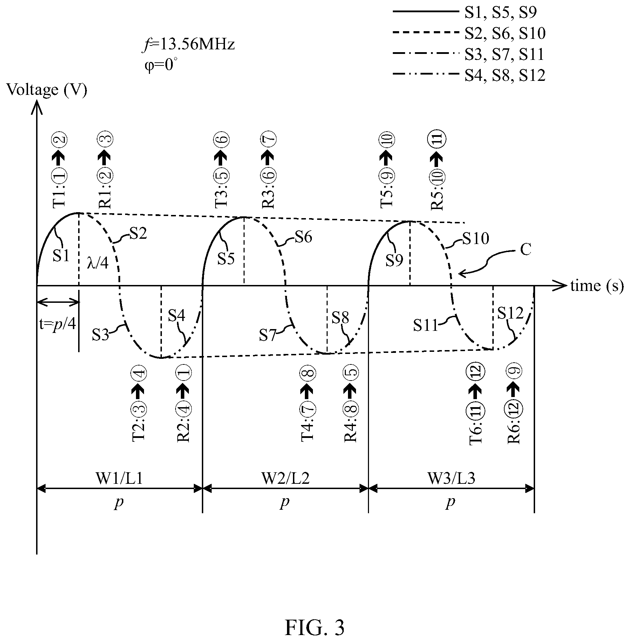

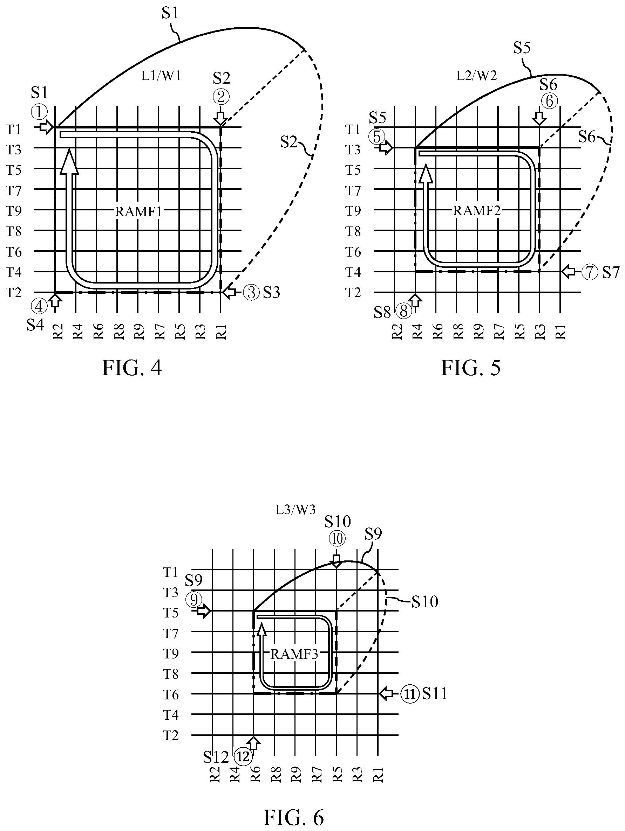

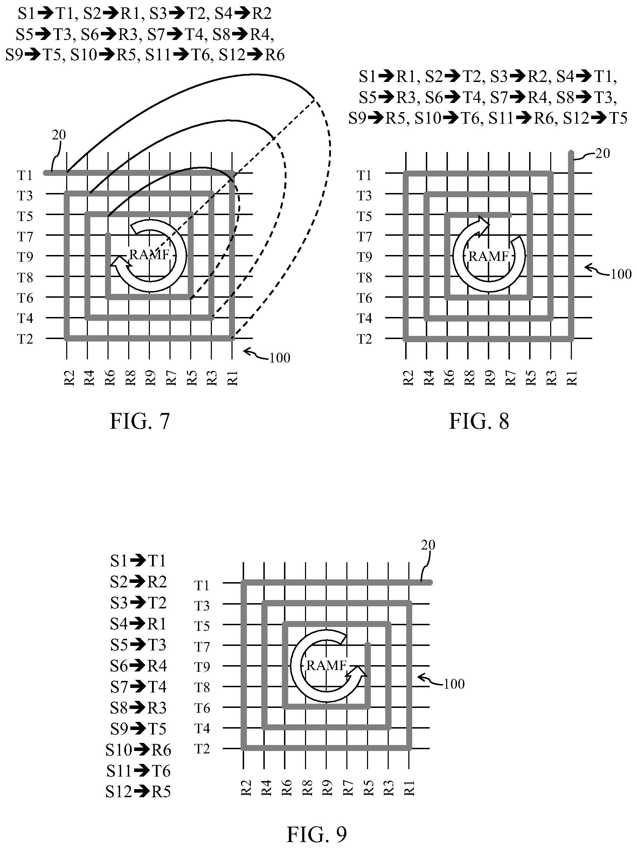

FIG. 3 to FIG. 7 are schematic diagrams illustrating the control principle of the first embodiment included in the present invention. FIG. 3 is a schematic diagram illustrating a combined waveform after superposition of multiple segments of radio frequency carrier signals generated by the RF controller module in the first embodiment included in the present invention; FIG. 4 is a schematic diagram illustrating the application of multiple segments of radio frequency carrier signals to a first turn coil to form a rotating alternating magnetic field included in the first embodiment; FIG. 5 is a schematic diagram illustrating the application of multiple segments of radio frequency carrier signals to a second turn coil to form a rotating alternating magnetic field included in the first embodiment; FIG. 6 is a schematic diagram illustrating the application of multiple segments of radio frequency carrier signals to a third turn coil to form a rotating alternating magnetic field included in the first embodiment; and FIG. 7 is a schematic diagram illustrating the structure for the antenna unit simulated by implementing the first embodiment included in the present invention.

The first embodiment preferably describes a conductive grid radio frequency control method, in particular an in-phase segmented temporal sequence RF control method. In the first embodiment, the conductive grid 100 is preferably configured to simulate, for example but not limited to: an NFC/RFID antenna having three turns of planar loop coils. Preferably, the conductive grid 100 is configured to function a first driving conductive wire T1, a first sensing conductive wire R1, a second driving conductive wire T2, and a second sensing conductive wire R2 as a first turn coil L1 to simulate a first turn planar loop coil of the NFC/RFID antenna, to function a third driving conductive wire T3, a third sensing conductive wire R3, a fourth driving conductive wire T4, and a fourth sensing conductive wire R4 as a second turn coil L2 to simulate a second turn planar loop coil of the NFC/RFID antenna, and to function a fifth driving conductive wire T5, a fifth sensing conductive wire R5, a sixth driving conductive wire T6, and a sixth sensing conductive wire R6 as a third turn coil L3 to simulate a third turn planar loop coil of the NFC/RFID antenna. The first turn planar loop coil or the first turn coil L1 has a relatively largest inner diameter, and the third turn planar loop coil or the third turn coil L3 has a relatively smallest inner diameter.

In this embodiment, the RF controller module 200 is configured to generate multiple segments of radio frequency carrier signals S1-S12 as shown in FIG. 3. Each segment of radio frequency carrier signals S1-S12 is separately generated by the RF controller module 200 and is an independent radio frequency carrier signal, and the waveform thereof is a quarter-wavelength wave or a λ/4 wave. However, when the multiple segments of radio frequency carrier signals S1-S12 are aligned to be in the same phase and placed on a waveform diagram of the same coordinate, a complete and continuous combined RF carrier signal C based on a sinusoid wave is well formed accordingly. The combined RF carrier signal C has, for example but not limited to, an operating frequency *f* of 13.56 MHz, a period of *p,* and a wavelength of λ. Alternatively, there is no phase difference between each segment of radio frequency carrier signals S1-S12, that is, the phase difference φ=0 degrees, meaning they are in the same phase.

Preferably, the waveforms of the first RF carrier signal S1, the fifth RF carrier signal S5, and the ninth RF carrier signal S9 are configured as the waveform of the first 1/4 wavelength or the first 1/4 period of a sine wave; the waveforms of the second RF carrier signal S2, the sixth RF carrier signal S6, and the tenth RF carrier signal S10 are configured as the waveform from 1/4 wavelength or 1/4 period to 1/2 wavelength or the first 1/2 period of the sine wave; the waveforms of the third RF carrier signal S3, the seventh RF carrier signal S7, and the eleventh RF carrier signal S11 are configured as the waveform from 1/2 wavelength or 1/2 period to 3/4 wavelength or the first 3/4 period of the sine wave; and the waveforms of the fourth RF carrier signal S4, the eighth RF carrier signal S8, and the twelfth RF carrier signal S12 are configured as the waveform from 3/4 wavelength or 3/4 period to a full wavelength or a full period of the sine wave.

Preferably, the combined RF carrier signal C includes a first turn RF carrier signal W1, a second turn RF carrier signal W2, and a third turn RF carrier signal W3; the first turn RF carrier signal W1 includes the first RF carrier signal S1, the second RF carrier signal S2, the third RF carrier signal S3, and the fourth RF carrier signal S4, applied to the first turn coil L1; the second turn RF carrier signal W2 includes the fifth RF carrier signal S5, the sixth RF carrier signal S6, the seventh RF carrier signal S7, and the eighth RF carrier signal S8, applied to the second turn coil L2; and the third turn RF carrier signal W3 includes the ninth RF carrier signal S9, the tenth RF carrier signal S10, the eleventh RF carrier signal S11, and the twelfth RF carrier signal S12, applied to the third turn coil L3.

The first turn RF carrier signal W1, the second turn RF carrier signal W2, and the third turn RF carrier signal W3 have the same period of *p* and the same operating frequency of f. The amplitudes of the first turn RF carrier signal W1, the second turn RF carrier signal W2, and the third turn RF carrier signal W3 gradually decreases over time to match the planar loop coils with gradually decreasing inner diameters.

As shown in FIG. 4, the RF controller module 200 is configured to perform the following procedures in sequence: at time t=0, applying the first RF carrier signal S1 to the first driving conductive wire T1 at position ①; at time t=p/4, applying the second RF carrier signal S2 to the first sensing conductive wire R1 at position ②; at time t=p/2, applying the third RF carrier signal S3 to the second driving conductive wire T2 at position ③; and at time t=3p/4, applying the fourth RF carrier signal S4 to the second sensing conductive wire R2 at position ④. Thereby, a first rotating alternating magnetic field (RAMF1) rotating in a clockwise direction is generated and formed within and around a rectangular area formed by the first turn coil L1 to radiate wireless radio frequency carrier signals, achieving the effect of simulating the first turn planar loop coil of an NFC/RFID antenna through the first turn coil L1.

As shown in FIG. 5, the RF controller module 200 is configured to continue to sequentially perform the following procedures: at time t=*p*, applying the fifth RF carrier signal S5 to the third driving conductive wire T3 at position ⑤; at time t=*p*+*p*/4, applying the sixth RF carrier signal S6 to the third sensing conductive wire R3 at position ⑥; at time t=*p+p*/2, applying the seventh RF carrier signal S7 to the fourth driving conductive wire T4 at position ⑦; and at time t=*p*+3*p*/4, applying the eighth RF carrier signal S8 to the fourth sensing conductive wire R4 at position ⑧. Thereby, a second rotating alternating magnetic field RAMF2 rotating in a clockwise direction is generated within and around a rectangular area formed by the second turn coil L2 to emit wireless radio frequency carrier signals, achieving the effect of simulating the second turn planar loop coil of an NFC/RFID antenna through the second turn coil L2. The second rotating alternating magnetic field RAMF2 has a magnetic field strength that is slightly smaller than that of the first rotating alternating magnetic field RAMF1.

As shown in FIG. 6, the RF controller module 200 is configured to continue to sequentially perform the following procedures: at time t=2*p*, applying the ninth RF carrier signal S9 to the fifth driving conductive wire T5 from position ⑨; at time *t*=2*p+p*/4*,* applying the tenth RF carrier signal S10 to the fifth sensing conductive wire R5 from position ⑩; at time *t*=2*p*+*p*/2*,* applying the eleventh RF carrier signal S11 to the sixth driving conductive wire T6 from position ⑪; and at time t=2*p*+3*p*/4, applying the twelfth RF carrier signal S12 to the sixth sensing conductive wire R6 from position ⑫. Thereby, a third rotating alternating magnetic field RAMF3 rotating in a clockwise direction is generated within and around a rectangular area formed by the third turn coil L3 to emit wireless radio frequency carrier signals, achieving the effect of simulating the third turn planar loop coil of an NFC/RFID antenna through the third turn coil L3. The third rotating alternating magnetic field RAMF3 has a magnetic field strength that is slightly smaller than that of the second rotating alternating magnetic field RAMF2.

When the RF controller module 200 successfully applies the multiple segments of radio frequency carrier signals S1-S12 to the first turn coil L1, the second turn coil L2, and the third turn coil L3 in sequence included in the conductive grid 100, it is equivalent to forming an RF antenna simulation unit 20 with three turns of planar loop coils, as shown in FIG. 7, which is used to emit radio frequency carrier signals having a frequency of 13.56 MHz, and is provided to simulate, for example but not limited to: an NFC/RFID antenna having three turns of planar loop coils.

Preferably, the RF controller module 200 is configured to generate the first RF carrier signal S1 to the twelfth RF carrier signal S12, finally forming the combined RF carrier signal C, thereby stacking up an NFC electric field or 13.56 MHz radio frequency carrier signals in the conductive grid 100, in particular within and around the area of the loop coils formed by the first turn coil L1 to the third turn coil L3, and a rotating alternating magnetic field which rotates clockwise overall.

In the first embodiment, as shown in FIG. 7, the RF controller module 200 is configured to select to start generating the rotating alternating magnetic field RAMF rotating clockwise from a driving conductive wire, that is, the RF controller module 200 starts from the first driving conductive wire T1 and applies the radio frequency carrier signals S1-S12 to the first driving conductive wire T1, the first sensing conductive wire R1, the second driving conductive wire T2, the second sensing conductive wire R2, the third driving conductive wire T3, the third sensing conductive wire R3, the fourth driving conductive wire T4, the fourth sensing conductive wire R4, the fifth driving conductive wire T5, the fifth sensing conductive wire R5, the sixth driving conductive wire T6, and the sixth sensing conductive wire R6 in sequence, to generate and emit a rotating alternating magnetic field RAMF rotating clockwise through the conductive grid 100 and simulate the RF antenna simulation unit 20.

Through the design described in the above-mentioned first embodiment, it is capable of generating a rotating alternating magnetic field around the conductive grid 100 to form the RF antenna simulation unit 20 so as to emit wireless radio frequency carrier signals. The RF antenna simulation unit 20 is preferably used for simulating a NFC antenna, a HF RFID (high frequency RFID) antenna, a LF RFID (low frequency RFID) antenna, a MST (magnetic secure transmission) antenna, a wireless power transfer antenna, or a wireless communication antenna, such that the conductive grid 100, which originally only functiones as a touch sensor for a touch panel, can be functioned as an antenna unit for emitting wireless radio frequency carrier signals at the same time, and has the advantage of utilizing the touch panel grid for radio frequency communication without the demands to configure an additional antenna or antenna module.

FIG. 8 is a schematic diagram illustrating the structure for the antenna unit simulated by implementing the second embodiment included in the present invention. In the second embodiment, the RF controller module 200 is configured to select to start generating a rotating alternating magnetic field rotating in a clockwise direction from a sensing conductive wire. That is, the RF controller module 200 starts from the first sensing conductive wire R1 and applies the radio frequency carrier signals S1-S12 to the first sensing conductive wire R1, the second driving conductive wire T2, the second sensing conductive wire R2, the first driving conductive wire T1, the third sensing conductive wire R3, the fourth driving conductive wire T4, the fourth sensing conductive wire R4, the third driving conductive wire T3, the fifth sensing conductive wire R5, the sixth driving conductive wire T6, the sixth sensing conductive wire R6, and the fifth driving conductive wire T5 in sequence, to generate and emit a rotating alternating magnetic field RAMF rotating clockwise through the conductive grid 100 to simulate the RF antenna simulation unit 20.

FIG. 9 is a schematic diagram illustrating the structure for the antenna unit simulated by implementing the third embodiment included in the present invention. In the third embodiment, the RF controller module 200 is configured to select to start generating a rotating alternating magnetic field rotating in a counterclockwise direction from a driving conductive wire. That is, the RF controller module 200 starts from the first driving conductive wire T1 and applies the radio frequency carrier signals S1-S12 to the first driving conductive wire T1, the second sensing conductive wire R2, the second driving conductive wire T2, the first sensing conductive wire R1, the third driving conductive wire T3, the fourth sensing conductive wire R4, the fourth driving conductive wire T4, the third sensing conductive wire R3, the fifth driving conductive wire T5, the sixth sensing conductive wire R6, the sixth driving conductive wire T6, and the fifth sensing conductive wire R5 in sequence, to generate and emit a rotating alternating magnetic field RAMF rotating counterclockwise through the conductive grid 100 to simulate the RF antenna simulation unit 20.

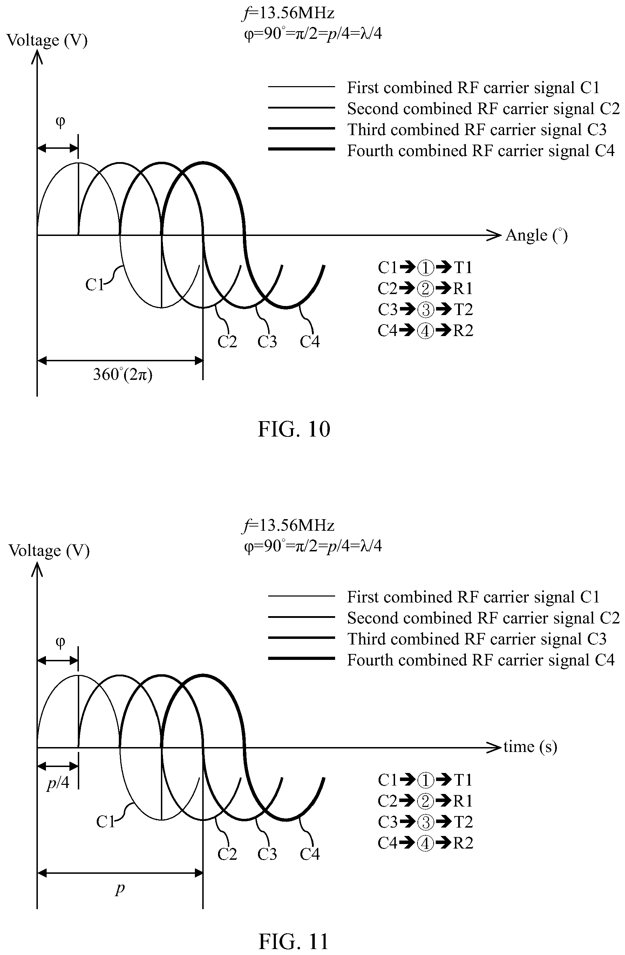

FIG. 10 is a schematic diagram illustrating the control principle for the fourth embodiment included in the present invention. The fourth embodiment is based on and includes the first embodiment. The fourth embodiment preferably describes a conductive grid radio frequency control method, in particular a simultaneous multiphase RF control method. In the fourth embodiment, in order to enhance the strength of the radio frequency carrier signals emitted by the conductive grid 100, to improve coupling efficiency, and to expand communication range, the RF controller module 200 is configured to generate a first combined RF carrier signal C1, a second combined RF carrier signal C2, a third combined RF carrier signal C3, and a fourth combined RF carrier signal C4, which have the same operating frequency and a phase difference of φ, for example but not limited to, φ=90°=π/2 or φ=p/4=λ/4, with respect to each other, and to apply these four signals at the same time (simultaneously), for example but not limited to t=0, to the first driving conductive wire T1, the first sensing conductive wire R1, the second driving conductive wire T2, and the second sensing conductive wire R2 through positions ①, ②, ③, and ④, respectively. At a next moment in time, for example but not limited to, t=0.0001 seconds, t=0.001 seconds, t=0.01 seconds, p/4 seconds, or t=p/2 seconds, etc., the RF controller module 200 is configured to continue performing the same operation, and repeat this cycle continuously.

The applied first combined RF carrier signal C1, second combined RF carrier signal C2, third combined RF carrier signal C3, and fourth combined RF carrier signal C4 are all generated according to the processes of generating the combined RF carrier signal C described in the first embodiment, and all have the operating frequency *f* of 13.56 MHz, and are all radiated through the RF antenna simulation unit 20 formed by the first turn coil L1, the second turn coil L2, and the third turn coil L3 of the conductive grid 100.

In comparison to the first embodiment which emits only one combined RF carrier signal each time by implementing the in-phase segmented temporal sequence RF control method, the fourth embodiment can emit four combined RF carrier signals each time by implementing the simultaneous multiphase RF control method. If the phase difference is further reduced, for example, reduced to φ=45°=π/4 or φ=p/8=λ/8, more combined RF carrier signals are emitted each time, which effectively enhances the magnetic field strength of RAMF1-RAMF3 formed within and around the conductive grid 100 and more effectively utilizes the overall structure for the conductive grid 100 to radiate energy, thereby achieving the effects of effectively enhancing the overall RF signal strength emitted by the conductive grid 100, improving coupling efficiency, and expanding the effective communication range. Preferably, the phase difference φ can be increased, for example, increased to φ=360°=2π=p=λ. Preferably, the phase difference φ can also be set to other values, for example but not limited to: φ=180°=π=p/2=λ/2, φ=22.5°=π/8=p/16=λ/16, or φ=11.25°=π/16=p/32=λ/32, and so on.

FIG. 11 is a schematic diagram illustrating the control principle for the fifth embodiment included in the present invention. The fifth embodiment is based on and includes the first embodiment. The fifth embodiment preferably describes a conductive grid radio frequency control method, in particular a multiphase time-interleaved RF control method. In the fifth embodiment, in order to enhance the strength of the radio frequency carrier signals emitted by the conductive grid 100, to improve coupling efficiency, and to expand communication range, the RF controller module 200 is configured to generate a first combined RF carrier signal C1, a second combined RF carrier signal C2, a third combined RF carrier signal C3, and a fourth combined RF carrier signal C4, which have the same operating frequency *f* and a phase difference φ of, for example but not limited to, 360°(2π), 180°(π), 90°(π/2), 45°(π/4), 22.5°(π/8), or 11.25°(π/16) with respect to each other, to apply these four signals at time intervals of, for example but not limited to: t=0.0001 seconds, t=0.001 seconds, t=0.01 seconds, p seconds, p/2 seconds, p/4 seconds, p/8 seconds, p/16 seconds, or p/32 seconds, to the first driving conductive wire T1, the first sensing conductive wire R1, the second driving conductive wire T2, and the second sensing conductive wire R2 through positions ①, ②, ③, and ④, respectively and sequentially, and to repeat performing the same operation continuously.

The applied first combined RF carrier signal C1, second combined RF carrier signal C2, third combined RF carrier signal C3, and fourth combined RF carrier signal C4 are all generated according to the processes of generating the combined RF carrier signal C described in the first embodiment, and all have the operating frequency f of 13.56 MHz, and are all radiated through the RF antenna simulation unit 20 formed by the first turn coil L1, the second turn coil L2, and the third turn coil L3 of the conductive grid 100.

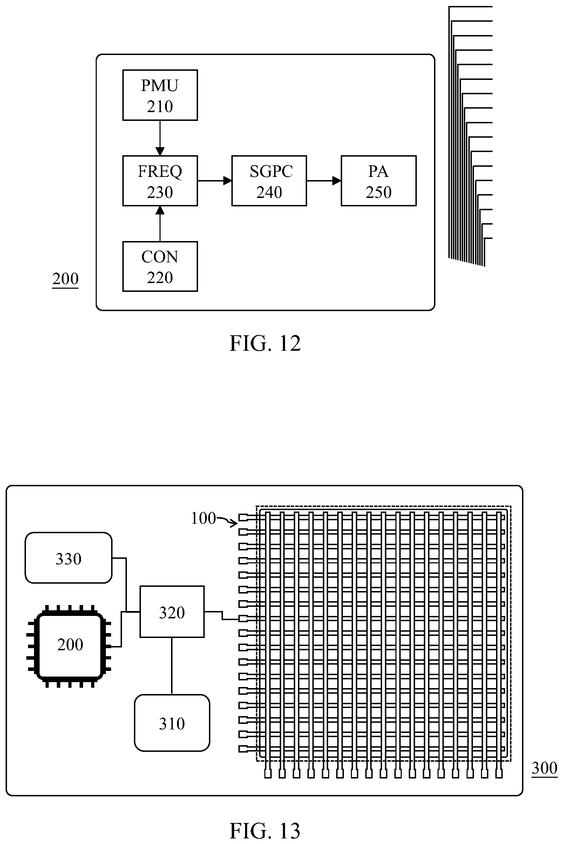

FIG. 12 is a schematic diagram illustrating the system architecture for the RF controller module included in the present invention. In some embodiments, the RF controller module 200 preferably includes multiple internal functional unit and components to realize and implement the RF control for the conductive grid 100. For example, the RF controller module 200 is configured to include a power management unit 210, a control unit 220, an oscillator 230, a signal generation and phase control unit 240, and a power amplifier 250. The power management unit (PMU) 210 is configured to supply electric power to every units and components. The control unit (CON) 220 is preferably, for example but not limited to: a microcontroller (MCU) or a field-programmable gate array (FPGA), and configured to execute overall operational logic, timing control, mode management, communication with external systems, etc.

Preferably, the RF controller module 200 is configured to further include an oscillator 230. The oscillator (FREQ) 230 is preferably, for example but not limited to, a crystal oscillator (XO) or a temperature-compensated crystal oscillator (TCXO), and configured to provide a stable reference clock for the operating frequency *f* according to instructions from the control unit 220. The RF controller module 200 is configured to further include a signal generation and phase control unit (SGPC) 240, which receives the reference clock and, according to instructions from the control unit 220, generates the first to twelfth RF carrier signals S1-S12, etc., which have specified operating frequencies and phase relationships. The RF controller module 200 is configured to further include a plurality of power amplifiers (PA) 250 to amplify the first to twelfth RF carrier signals S1-S12, to render the first to twelfth RF carrier signals S1-S12 to have sufficient transmission power and electric current to form the first to third rotating alternating magnetic fields RAMF1-RAMF3.

FIG. 13 is a schematic diagram illustrating the system architecture for the conductive grid radio frequency control system included in the present invention. The conductive grid radio frequency control system 300 provided by the present invention includes a conductive grid 100, an RF controller module 200, a main control module 310, a switch 320, and a touch panel driver module 330.

The touch panel driver module 330 is preferably a conventional touch panel driver, which uses the conductive grid 100 as a sensor grid or a sensing array, and performs conventional touch panel functions. The touch panel driver module 330 drives the driving conductive wire layer 110 included in the conductive grid 100 to generate an induced electric field in order to generate mutual capacitance with the sensing conductive wire layer 130, and determines the positions of touch by scanning the entire sensing conductive wire layer 130 to detect any changes in mutual capacitance values.

The switch 320 further includes a plurality of RF switches and is controlled by the main control module 310 to selectively electrically connect the first to ninth driving conductive wires T1-T9 and the first to ninth sensing conductive wires R1-R9 included in the conductive grid 100 to either the touch panel driver module 330 or the RF controller module 200, to cause the conductive grid 100 to switch a operating mode thereof between a touch mode and an antenna mode. When the conductive grid 100 is switched to be electrically connected to the touch panel driver module 330, the conductive grid 100 enters the touch mode. When the conductive grid 100 is switched to be electrically connected to the RF controller module 200, the conductive grid 100 enters the antenna mode.

The main control module 310 is configured to, by controlling the switch 320, determine whether the conductive grid 100 is electrically connected to or disconnected from the RF controller module 200 or the touch panel driver module 330, according to external instructions or specific application scenarios, so as to control the the conductive grid 100 to switching the operating mode between the touch mode and the antenna mode.

Furthermore, in order to prevent mutual interference caused by operating the touch mode and the antenna mode at the same time, the main control module 310 is preferably configured to adopt a time-division multiplexing (TDM) technology, within extremely short time intervals, to control the conductive grid 100 to alternately switch between the electrical connection with the RF controller module 200 and the electrical connection with the touch panel driver module 330, to control the conductive grid 100 to alternate between performing the touch sensing operations and performing the radio frequency electromagnetic field generation operations in high-speed, to enable the conductive grid 100 to have the dual functions of touch sensing and RF carrier signal emission/radiation simultaneously, and to be capable of acting as a touch panel and an NFC/RFID antenna at the same time.

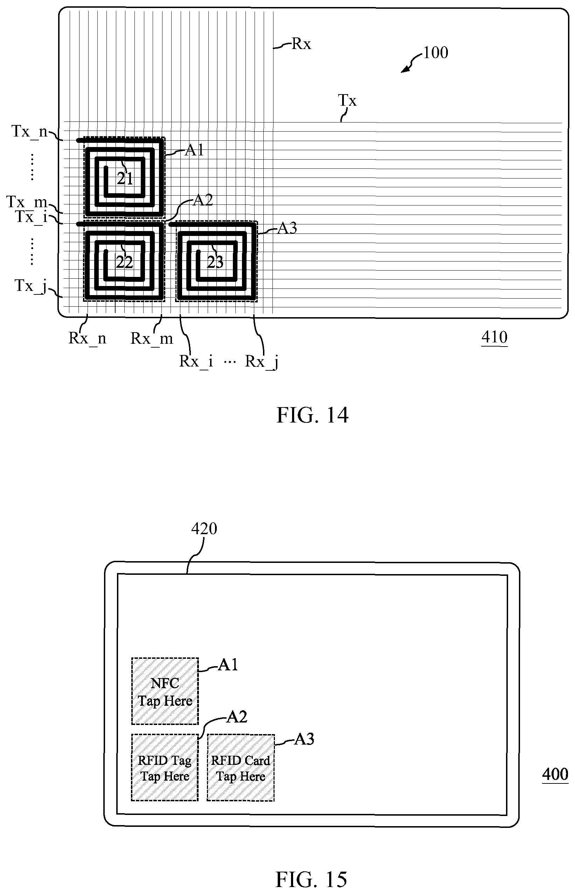

FIG. 14 is a schematic diagram illustrating the sensing area configuration obtained by performing the selective sensing area configuration for the touch panel included in the touch display by the conductive grid radio frequency control system included in the present invention; FIG. 15 is a schematic diagram illustrating the indication information correspondingly displayed in the touch display when the conductive grid radio frequency control system included in the present invention operates the selective sensing area configuration. In this embodiment, the conductive grid radio frequency control system 300 is preferably integrated with a touch display 400. The touch display 400 includes a touch panel 410 and a display area 420. The touch panel 410 is preferably disposed in an area including the display area 420.

As shown in FIG. 14, the touch panel 410 uses the conductive grid 100, which is formed by a plurality of orthogonally arranged driving electrodes Tx and sensing electrodes Rx, as a touch sensor grid. The RF controller module 200 is configured, according to a user's selected setting or a system's preset value, to select and set, for example but not limited to, a first sensing area A1, a second sensing area A2, and a third sensing area A3 included in the conductive grid 100 as antenna areas to sense and detect.

Preferably, the RF controller module 200 is configured to select and define the scope of the first sensing area A1 as an antenna sensing area, and to implement the conductive grid radio frequency control method for the driving electrodes Tx_n to Tx_m and the sensing electrodes Rx_n to Rx_m included within the first sensing area A1, in order to form a first RF antenna simulation unit 21 on the conductive grid 100 corresponding to the scope of the first sensing area A1, to serve as, for example but not limited to, an NFC antenna.

Preferably, the RF controller module 200 is configured to select and define the scope of the second sensing area A2 as an antenna sensing area, and to implement the conductive grid radio frequency control method for the driving electrodes Tx_i to Tx_j and the sensing electrodes Rx_n to Rx_m included within the second sensing area A2, in order to form a second RF antenna simulation unit 22 on the conductive grid 100 corresponding to the scope of the second sensing area A2, to serve as, for example but not limited to, an LF RFID antenna.

Preferably, the RF controller module 200 is configured to select and define the scope of the third sensing area A3 as an antenna sensing area, and to implement the conductive grid radio frequency control method for the driving electrodes Tx_i to Tx_j and the sensing electrodes Rx_i to Rx_j included within the third sensing area A3, in order to form a third RF antenna simulation unit 23 on the conductive grid 100 corresponding to the scope of the third sensing area A3, to serve as, for example but not limited to, an HF RFID antenna.

As shown in FIG. 15, when the RF controller module 200 successfully simulates the first RF antenna simulation unit 23, the second RF antenna simulation unit 23, and the third RF antenna simulation unit 23 on the conductive grid 100, the main control module 310 or the RF controller module 200 is preferably configured to display indication information in areas corresponding to the first sensing area A1, the second sensing area A2, and the third sensing area A3 in the display area 420 of the touch display 400. The indication information is preferably, for example but not limited to: a pattern, a design, an icon, a visual sign, a text, an arrow, a bright spot, an illuminated block, a graphical illustration, or a textual prompt, in order to clearly indicate to the user the specific positions where the first RF antenna simulation unit 23, the second RF antenna simulation unit 23, and the third RF antenna simulation unit 23 are configured.

For example, the main control module 310 or the RF controller module 200 is configured to display indicative text such as 'NFC Tap Here', 'RFID Tag Tap Here', and 'RFID Card Tap Here', in the form of colored blocks in areas corresponding to the first sensing area A1, the second sensing area A2, and the third sensing area A3, respectively, in the display area 420, in order to clearly indicate to the user the sensing positions for NFC cards, RFID tags, and RFID cards, clearly guiding consumers to intuitively bring NFC/RFID target devices close to the correct positions.

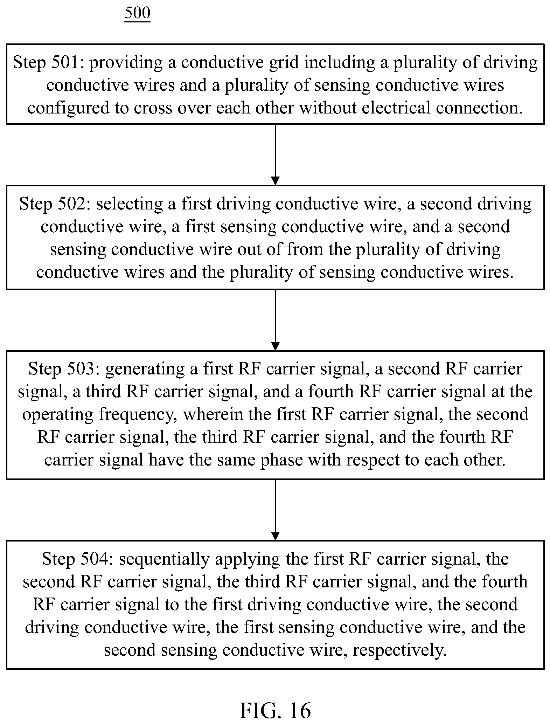

FIG. 16 is a flow chart showing the implementation steps for the conductive grid radio frequency control method included in the present invention. The conductive grid radio frequency control method 500 included in the present invention preferably includes, but is not limited to, the steps as follows. Step 501: providing a conductive grid including a plurality of driving conductive wires and a plurality of sensing conductive wires configured to cross over each other without electrical connection. Step 502: selecting a first driving conductive wire, a second driving conductive wire, a first sensing conductive wire, and a second sensing conductive wire out of from the plurality of driving conductive wires and the plurality of sensing conductive wires. Step 503: generating a first RF carrier signal, a second RF carrier signal, a third RF carrier signal, and a fourth RF carrier signal at the operating frequency, wherein the first RF carrier signal, the second RF carrier signal, the third RF carrier signal, and the fourth RF carrier signal have the same phase with respect to each other. Step 504: sequentially applying the first RF carrier signal, the second RF carrier signal, the third RF carrier signal, and the fourth RF carrier signal to the first driving conductive wire, the second driving conductive wire, the first sensing conductive wire, and the second sensing conductive wire, respectively.

The conductive grid radio frequency control module, system, and method provided by the present invention, is applied not only to simulate NFC antennas, but is applied also to other technologies that utilize radio frequency carrier principles for near-field wireless communication, for example but not limited to: RFID antennas of RFID initiating devices. The technology according to the present invention can also be applied to simulate HF RFID antennas for initiating devices that read HF RFID in compliance with relevant standards, for example but not limited to: ISO/IEC 14443 A/B, ISO/IEC 18092, ISO/IEC 15693, and is suitable for various application scenarios such as smart card reading, access control, logistics tracking, electronic ticketing, etc.

The present invention is preferably applicable to POS (Point-of-Sale) terminals, Kiosk machines, SCO (Self-Checkout) terminals, All-in-One PCs with integrated touch functions, automatic ticketing machines, or access control terminals, etc. Traditional POS terminals, SCO terminals, or Kiosk devices typically include a touch screen for an operating interface, and an independent NFC/RFID reading module for payment or identification. The conductive grid radio frequency control module, system, and method provided by the present invention can integrate NFC/RFID sensing functions directly into the touch screen, in particular, into the front display surface area. Users only need to bring an NFC payment card, smartphone, or RFID identification badge close to the touch screen, lightly touch it, or tap it to complete operations such as checkout, member identification, ticket validation, without needing to search for or align with a specific sensing area outside the screen. It not only greatly enhances the intuitiveness and convenience of use for consumers, but also significantly improves the smoothness and intuitiveness of the user experience.

The conductive grid radio frequency control module, system, and method provided by the present invention further include the features as follows:
(1) Highly functional integration: Cleverly reuses the conductive grid of the touch panel, enabling the touch screen to simultaneously possess two functions: touch sensing and an RF antenna, such as an NFC or RFID antenna, reducing the number of components.
(2) Significant space saving: Eliminates the need to reserve installation space for an independent NFC/RFID antenna module, which is particularly advantageous for mobile devices, POS machines, etc., with limited internal space, contributing to lighter, thinner, and more compact product designs.
(3) Reduced potential costs: Saves material costs required for configuring an NFC/RFID antenna module, as well as associated FPC connection, assembly, and testing costs.
(4) Simplified design and assembly: Reduces RF components requiring layout and routing, simplifying mechanical design and production assembly processes.
(5) Enhanced user experience: Especially in applications such as POS, SCO, Kiosk, etc., achieves intuitive operation where the 'screen is the sensing area,' enhancing the convenience and smoothness of interaction.
(6) Design flexibility: Brings more possibilities to the industrial design of products, for example, making it possible to achieve a completely flat, aperture-free front surface of a device.

There are further embodiments provided as follows.

Embodiment 1: A conductive grid radio frequency control method, including: providing a first driving conductive wire and a first sensing conductive wire configured to cross over each other without electrical connection; generating a first radio frequency (RF) carrier signal and a second RF carrier signal having the same operating frequency; and applying the first RF carrier signal and the second RF carrier signal to the first driving conductive wire and the first sensing conductive wire respectively in sequence, to generate a rotating alternating magnetic field around the first driving conductive wire and the first sensing conductive wire.

Embodiment 2: The conductive grid radio frequency control method according to Embodiment 1, further including an in-phase segmented temporal sequence RF control method, wherein the in-phase segmented temporal sequence RF control method includes: providing a conductive grid including a plurality of driving conductive wires and a plurality of sensing conductive wires configured to cross over each other without electrical connection; selecting the first driving conductive wire, a second driving conductive wire, the first sensing conductive wire, and a second sensing conductive wire out of from the plurality of driving conductive wires and the plurality of sensing conductive wires; generating the first RF carrier signal, the second RF carrier signal, a third RF carrier signal, and a fourth RF carrier signal at the same operating frequency, wherein the first RF carrier signal, the second RF carrier signal, the third RF carrier signal, and the fourth RF carrier signal have the same phase; and applying the first RF carrier signal, the second RF carrier signal, the third RF carrier signal, and the fourth RF carrier signal to the first driving conductive wire, the first sensing conductive wire, the second driving conductive wire, and the second sensing conductive wire respectively in sequence.

Embodiment 3: The conductive grid radio frequency control method according to Embodiment 2, further including a simultaneous multiphase RF control method, wherein the simultaneous multiphase RF control method includes: combining the first RF carrier signal, the second RF carrier signal, the third RF carrier signal, and the fourth RF carrier signal to form a first combined RF carrier signal; generating a second combined RF carrier signal having a phase difference with respect to the first combined RF carrier signal based on the first combined RF carrier signal; and applying the first combined RF carrier signal and the second combined RF carrier signal to the first driving conductive wire and the second driving conductive wire respectively at the same time.

Embodiment 4: The conductive grid radio frequency control method according to Embodiment 2, further including a multiphase time-interleaved RF control method, wherein the multiphase time-interleaved RF control method includes: combining the first RF carrier signal, the second RF carrier signal, the third RF carrier signal, and the fourth RF carrier signal to form a first combined RF carrier signal; generating a second combined RF carrier signal having a phase difference with respect to the first combined RF carrier signal based on the first combined RF carrier signal; and applying the first combined RF carrier signal and the second combined RF carrier signal to the first driving conductive wire and the second driving conductive wire respectively at different time.

Embodiment 5: A conductive grid radio frequency control method, including: providing a first sensing conductive wire and a second driving conductive wire configured to cross over each other without electrical connection; generating a first radio frequency (RF) carrier signal and a second RF carrier signal having the same operating frequency; and applying the first RF carrier signal and the second RF carrier signal to the first sensing conductive wire and the second driving conductive wire respectively in sequence, to generate a rotating alternating magnetic field around the first sensing conductive wire and the second driving conductive wire.

Embodiment 6: A conductive grid radio frequency control method, including: providing a first sensing conductive wire and a first driving conductive wire configured to cross over each other without electrical connection; generating a first radio frequency (RF) carrier signal and a second RF carrier signal having the same operating frequency; and applying the first RF carrier signal and the second RF carrier signal to the first sensing conductive wire and the first driving conductive wire respectively in sequence, to generate a rotating alternating magnetic field around the first sensing conductive wire and the first driving conductive wire.

Embodiment 7: A conductive grid radio frequency control module, including: a conductive grid including a driving conductive wire and a sensing conductive wire configured to cross over each other without electrical connection; an RF controller module configured to: generate a first RF carrier signal and a second RF carrier signal having the same operating frequency; and apply the first RF carrier signal and the second RF carrier signal to the sensing conductive wire and the driving conductive wire respectively in sequence, to generate a rotating alternating magnetic field around the driving conductive wire and the sensing conductive wire.

Embodiment 8: The conductive grid radio frequency control module according to Embodiment 7, wherein the RF controller module further includes: a power management unit, a control unit, an oscillator, a signal generation and phase control unit, and a power amplifier connected with each other.

Embodiment 9: A conductive grid radio frequency control system, including: a conductive grid including a driving conductive wire and a sensing conductive wire configured to cross over each other without electrical connection; an RF controller module configured to: generate a first RF carrier signal and a second RF carrier signal having the same operating frequency; apply the first RF carrier signal and the second RF carrier signal to the driving conductive wire and the sensing conductive wire respectively in sequence, to generate a rotating alternating magnetic field around the driving conductive wire and the sensing conductive wire to simulate an antenna unit; and display an indication information corresponding to the antenna unit within a display area included in a touch display; a touch panel driver module configured to drive the conductive grid to act as a touch sensor grid; a switch configured to control an electrical connection of the conductive grid with either the RF controller module or with the touch panel driver module; and a main control module configured to control the switch and the display area of the touch display to display the indication information corresponding to the antenna unit.

Embodiment 10: The conductive grid radio frequency control system according to Embodiment 9, wherein the main control module is configured to control the switch based on a time-division multiplexing technology, to switch the electrical connection of the conductive grid between the RF controller module and the touch panel driver module alternatively.

Embodiment 11: A touch panel, including: a conductive grid including a driving conductive wire and a sensing conductive wire configured to cross over each other without electrical connection; and an RF controller module configured to: generate a first RF carrier signal and a second RF carrier signal having the same operating frequency; and apply the first RF carrier signal and the second RF carrier signal to the sensing conductive wire and the driving conductive wire respectively in sequence, to generate a rotating alternating magnetic field around the driving conductive wire and the sensing conductive wire.

Embodiment 12: The touch panel according to Embodiment 11, further including: a touch panel driver module configured to drive the conductive grid to act as a touch sensor grid; a switch configured to switch the electrical connection of the conductive grid between the RF controller module and the touch panel driver module; and a main control module configured to control the switch.

While the disclosure has been described in terms of what are presently considered to be the most practical and preferred embodiments, it is to be understood that the disclosure need not be limited to the disclosed embodiments. On the contrary, it is intended to cover various modifications and similar arrangements included within the scope of the appended claims, which are to be accorded with the broadest interpretation so as to encompass all such modifications and similar structures. Therefore, the above description and illustration should not be taken as limiting the scope of the present disclosure which is defined by the appended claims.

## Claims

1. A conductive grid radio frequency control method, comprising:
providing a first driving conductive wire and a first sensing conductive wire configured to cross over each other without electrical connection;
generating a first radio frequency (RF) carrier signal and a second RF carrier signal having the same operating frequency; and
applying the first RF carrier signal and the second RF carrier signal to the first driving conductive wire and the first sensing conductive wire respectively in sequence, to generate a rotating alternating magnetic field around the first driving conductive wire and the first sensing conductive wire.

2. The conductive grid radio frequency control method according to claim 1, further comprising an in-phase segmented temporal sequence RF control method, wherein the in-phase segmented temporal sequence RF control method comprises:
providing a conductive grid comprising a plurality of driving conductive wires and a plurality of sensing conductive wires configured to cross over each other without electrical connection;
selecting the first driving conductive wire, a second driving conductive wire, the first sensing conductive wire, and a second sensing conductive wire out of from the plurality of driving conductive wires and the plurality of sensing conductive wires;
generating the first RF carrier signal, the second RF carrier signal, a third RF carrier signal, and a fourth RF carrier signal at the same operating frequency, wherein the first RF carrier signal, the second RF carrier signal, the third RF carrier signal, and the fourth RF carrier signal have the same phase; and
applying the first RF carrier signal, the second RF carrier signal, the third RF carrier signal, and the fourth RF carrier signal to the first driving conductive wire, the first sensing conductive wire, the second driving conductive wire, and the second sensing conductive wire respectively in sequence.

3. The conductive grid radio frequency control method according to claim 2, further comprising a simultaneous multiphase RF control method, wherein the simultaneous multiphase RF control method comprises:
combining the first RF carrier signal, the second RF carrier signal, the third RF carrier signal, and the fourth RF carrier signal to form a first combined RF carrier signal;
generating a second combined RF carrier signal having a phase difference with respect to the first combined RF carrier signal based on the first combined RF carrier signal; and
applying the first combined RF carrier signal and the second combined RF carrier signal to the first driving conductive wire and the second driving conductive wire respectively at the same time.

4. The conductive grid radio frequency control method according to claim 2, further comprising a multiphase time-interleaved RF control method, wherein the multiphase time-interleaved RF control method comprises:
combining the first RF carrier signal, the second RF carrier signal, the third RF carrier signal, and the fourth RF carrier signal to form a first combined RF carrier signal;
generating a second combined RF carrier signal having a phase difference with respect to the first combined RF carrier signal based on the first combined RF carrier signal; and
applying the first combined RF carrier signal and the second combined RF carrier signal to the first driving conductive wire and the second driving conductive wire respectively at different time.

5. A conductive grid radio frequency control method, comprising:
providing a first sensing conductive wire and a second driving conductive wire configured to cross over each other without electrical connection;
generating a first radio frequency (RF) carrier signal and a second RF carrier signal having the same operating frequency; and
applying the first RF carrier signal and the second RF carrier signal to the first sensing conductive wire and the second driving conductive wire respectively in sequence, to generate a rotating alternating magnetic field around the first sensing conductive wire and the second driving conductive wire.

6. A conductive grid radio frequency control method, comprising:
providing a first sensing conductive wire and a first driving conductive wire configured to cross over each other without electrical connection;
generating a first radio frequency (RF) carrier signal and a second RF carrier signal having the same operating frequency; and
applying the first RF carrier signal and the second RF carrier signal to the first sensing conductive wire and the first driving conductive wire respectively in sequence, to generate a rotating alternating magnetic field around the first sensing conductive wire and the first driving conductive wire.

7. A conductive grid radio frequency control module, comprising:
a conductive grid comprising a driving conductive wire and a sensing conductive wire configured to cross over each other without electrical connection;
an RF controller module configured to:
generate a first RF carrier signal and a second RF carrier signal having the same operating frequency; and
apply the first RF carrier signal and the second RF carrier signal to the sensing conductive wire and the driving conductive wire respectively in sequence, to generate a rotating alternating magnetic field around the driving conductive wire and the sensing conductive wire.

8. The conductive grid radio frequency control module according to claim 7, wherein the RF controller module further comprises: a power management unit, a control unit, an oscillator, a signal generation and phase control unit, and a power amplifier connected with each other.

9. A conductive grid radio frequency control system, comprising:
a conductive grid comprising a driving conductive wire and a sensing conductive wire configured to cross over each other without electrical connection;
an RF controller module configured to:
generate a first RF carrier signal and a second RF carrier signal having the same operating frequency;
apply the first RF carrier signal and the second RF carrier signal to the driving conductive wire and the sensing conductive wire respectively in sequence, to generate a rotating alternating magnetic field around the driving conductive wire and the sensing conductive wire to simulate an antenna unit; and
display an indication information corresponding to the antenna unit within a display area comprised in a touch display;
a touch panel driver module configured to drive the conductive grid to act as a touch sensor grid;
a switch configured to control an electrical connection of the conductive grid with either the RF controller module or with the touch panel driver module; and
a main control module configured to control the switch and the display area of the touch display to display the indication information corresponding to the antenna unit.

10. The conductive grid radio frequency control system according to claim 9, wherein the main control module is configured to control the switch based on a time-division multiplexing technology, to switch the electrical connection of the conductive grid between the RF controller module and the touch panel driver module alternatively.

11. A touch panel, comprising:
a conductive grid comprising a driving conductive wire and a sensing conductive wire configured to cross over each other without electrical connection; and
an RF controller module configured to:
generate a first RF carrier signal and a second RF carrier signal having the same operating frequency; and
apply the first RF carrier signal and the second RF carrier signal to the sensing conductive wire and the driving conductive wire respectively in sequence, to generate a rotating alternating magnetic field around the driving conductive wire and the sensing conductive wire.

12. The touch panel according to claim 11, further comprising:
a touch panel driver module configured to drive the conductive grid to act as a touch sensor grid;
a switch configured to switch the electrical connection of the conductive grid between the RF controller module and the touch panel driver module; and
a main control module configured to control the switch.
